# EUROPEAN PATENT SPECIFICATION

(11) **EP 1 384 541 B1**
(45) Date of publication and mention of the grant of the patent: **08.06.2005**
(21) Application number: 03016312.5
(22) Date of filing: 18.07.2003
(51) Int. Cl.: B23C 3/13

(54) **Method and system for machining rolled strip to remove surface defects**
Verfahren und Vorrichtung zur Bearbeitung von gewalztem Band zur Beseitigung von Oberflächenfehlern
Procédé et dispositif d'usinage de bande laminée pour éliminer les défauts superficiels

(30) Priority: 23.07.2002 IT TO20020648
(43) Date of publication of application: 28.01.2004
(73) Proprietor: EUROPA METALLI S.p.A., 50127 Firenze (IT)
(72) Inventor: Malatesta, Fosco, 55051 Barga (IT)
(74) Representative: Cerbaro, Elena, Dr.

(56) References cited:
- EP-A- 0 705 653
- CH-A- 580 460
- DE-A- 10 149 573
- US-A- 4 197 043
- US-B1- 6 195 859

## Description

The present invention relates to a method and system for machining rolled strip in accordance with the preamble of the independent claims (see for instance CH-A-580460).

Rolled strip machining methods normally comprise a step to remove surface defects, which mainly comprise an oxidized layer which must be removed to permit follow-up machining of the strip.

Removal is normally effected by milling or so-called "scalping", which must obviously be done on both faces of the strip.

To do this, the rolled strip is unwound off a reel and fed through a first milling machine, which removes defects off the downward face of the strip. At the same time, the waste material drops down by force of gravity and is normally removed by suction.

This is followed by a second milling step to remove defects off the upward face of the strip, and during which the waste material must be removed by upward suction. This poses problems, however, in that part of the waste material may not be removed successfully from the strip machining line, and may drop back down on to the strip and either be taken up by the cutter or crushed on to the strip as it is fed beneath the strip feed rollers. In either case, the surface of the strip is impaired. It is therefore an object of the present invention to provide a method of machining rolled strip, designed to eliminate the aforementioned drawbacks, and which, in particular, provides for effective removal of waste material at the surface defect milling step, and which at the same time is straightforward and inexpensive.

According to the present invention, there is provided a method of machining rolled strip to remove surface defects, said method comprising a first milling step on a first face, and a second milling step on a second face opposite the first; characterized in that both said first and said second milling steps are performed with said first and said second face facing downwards; and by comprising the steps of performing said first milling step on said first face of said strip as the strip is fed in a first direction along a predetermined path; and bending said strip to turn it over, so as to perform said second milling step on said second face as said strip is fed, upside down, in a second direction opposite said first direction.

According to the present invention, there is also provided a system for machining rolled strip to remove surface defects, and comprising a first milling machine for performing a first milling step on a first face of said rolled strip, and a second milling machine for performing a second milling step on a second face of said rolled strip; characterized by comprising means for bending said rolled strip; and in that said means are interposed between said first milling machine and said second milling machine, so that said second milling step is performed on said second face facing downwards.

A non-limiting embodiment of the invention will be described by way of example with reference to the accompanying drawings, in which:
Figure 1 shows a system for machining rolled strip in accordance with the present invention;
Figure 2 shows a diagram of a system for machining rolled strip in accordance with an alternative preferred embodiment of the present invention.

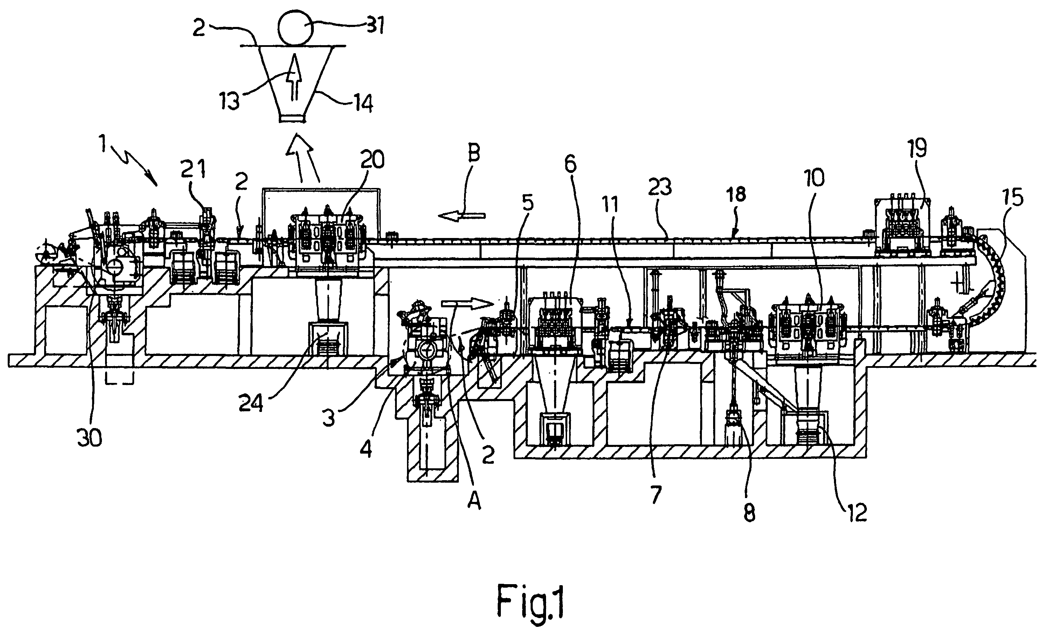

Number 1 in Figure 1 indicates as a whole a machining system for removing surface defects from a rolled strip 2, and comprising numerous known devices which are therefore not described in detail.

At the start of a line for machining strip 2, machining system 1 comprises an unwinding assembly 4 for unwinding rolled strip 2 off a reel 3; a first and second straightening machine 6, 19; and a first and second milling machine 10, 20, an enlarged detail of which is shown in Figure 1. In the embodiment shown, milling machines 10, 20 have a first and second waste collecting device 12, 24 respectively.

Machining system 1 also comprises a winding assembly 30 for winding rolled strip 2.

According to the present invention, a bending device 15 is located between first milling machine 10 and second milling machine 20 to bend and change the travelling direction of strip 2.

Machining system 1 is used to implement the method according to the present invention, and to remove surface defects from strip 2.

The method comprises the steps of unwinding strip 2 off unwinding assembly 4, and feeding strip 2 along a first path in a first direction A through an infeed assembly 5 to first straightening machine 6, where strip 2 is straightened.

The strip is then fed beneath a transverse scraper 7, through a brushing machine 8, and then to milling machine 10.

On first milling machine 10, the surface defects on the bottom face 11 of strip 2 are removed by a cutter 13 as strip 2 is fed beneath a roller 31. The waste material drops down by force of gravity into a bin 14, and is fed to first waste collecting and conveying device 12, e.g. a conveyor belt.

Strip 2 is then fed to bending device 15, which bends and changes the travelling direction of strip 2, in particular by 180°, so that strip 2 is fed in a second direction B, opposite the first, along a second path parallel to the first path.

The strip is then fed to second straightening machine 19 and subjected to another straightening step.

Strip 2 is then fed by a roller conveyor 23 to second milling machine 20, which machines the now downward-facing second face 18 of strip 2.

Strip 2 is then fed beneath a second transverse scraper 21, and finally to winding assembly 30 which winds strip 2 back on to a reel.

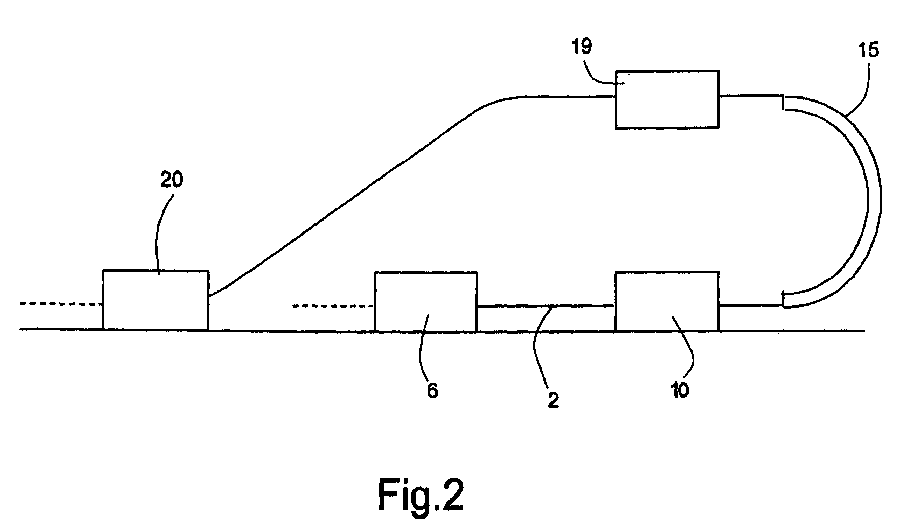

In a second alternative preferred embodiment shown schematically in Figure 2, roller conveyor 23 bends strip 2 further so that first milling machine 10 and second milling machine 20 operate on the same level.

The advantages of the machining method according to the present invention will be clear from the foregoing description.

In particular, it provides for removing surface defects while at the same time ensuring straightforward, low-cost removal of all waste material simply by force of gravity with no suction required.

Eliminating suction by collecting waste material simply by force of gravity also reduces the noise level of the system.

Employing milling machines 10, 20 on the same level, as in the preferred embodiment, also makes it easier to change cutter 13, simplifies maintenance of both milling machines, and so reduces the running cost of system 1.

Clearly, changes may be made to the rolled strip machining method as described herein without, however, departing from the scope of the present invention.

In particular, changes may be made to the number and sequence of machining steps performed on strip 2, and to the number and location of the devices in the system.

## Claims

1. A method of machining rolled strip (2) to remove surface defects, said method comprising a first milling step on a first face (11), and a second milling step on a second face (18) opposite the first; **characterized in that** both said first and said second milling steps are performed with said first and said second face facing downwards; and by comprising the steps of performing said first milling step on said first face (11) of said strip as the strip is fed in a first direction (A) along a predetermined first path; and bending said strip, so as to perform said second milling step on said second face (18) as said strip is fed in a second direction (B) opposite said first direction.

2. A method as claimed in Claim 1, **characterized in that** said second milling step is performed on said second face (18) as said strip (2) is fed along a second path parallel to said first path.

3. A method as claimed in Claim 1 or 2, **characterized by** comprising a step of collecting waste material by force of gravity.

4. A method as claimed in any one of Claims 1 to 3, **characterized by** comprising a step of unwinding said strip (2) off a first reel (3), and a step of winding said strip on to a second reel.

5. A method as claimed in Claim 4, **characterized in that** said unwinding step precedes said first milling step, and said winding step follows said second milling step.

6. A method as claimed in any one of the foregoing Claims, **characterized by** comprising at least one straightening step to straighten said strip.

7. A method as claimed in Claim 6, **characterized in that** a first straightening step precedes said first milling step, and a second straightening step precedes said second milling step.

8. A method as claimed in any one of the foregoing Claims, **characterized in that** said surface defects comprise oxidized material.

9. A system (1) for machining rolled strip (2) to remove surface defects, and comprising a first milling machine (10) for performing a first milling step on a first face (11) of said rolled strip (2), and a second milling machine (20) for performing a second milling step on a second face (18) of said rolled strip; **characterized by** comprising means (15) for bending said rolled strip; and in that said means (15) are interposed between said first milling machine (10) and said second milling machine (20), so that said second milling step is performed on said second face (18) facing downwards.

10. A system as claimed in claim 9, **characterized by** comprising waste material collecting means (12, 24) associated with each said milling machine (10, 20).

11. A system as claimed in Claim 10, **characterized in that** said waste material collecting means (12, 24) operate from underneath.

12. A system as claimed in Claim 9, **characterized in that** said first milling machine (10) and said second milling machine (20) are on the same level.

13. A system as claimed in Claim 12, **characterized by** comprising a first straightening machine (6) and a second straightening machine (19).

## Patentansprüche

1. Verfahren des Bearbeitens eines gewalzten Bandes (2) zur Beseitigung von Oberflächenfehlern, wobei das Verfahren einen ersten Frässchritt auf einer ersten Fläche (11) und einen zweiten Frässchritt auf einer zweiten Fläche (18), die zur ersten Fläche gegenläufig angeordnet ist, umfasst; **dadurch gekennzeichnet, dass** die beiden genannten ersten und zweiten Frässchritte auf der ersten und der zweiten Fläche, die nach unten gerichtet sind, ausgeführt werden, und **gekennzeichnet durch** das Einschließen der Ausführungsschritte des genannten ersten Frässchrittes auf der ersten Fläche (11) auf dem genannten Band, sobald das Band in eine erste Richtung (A) entlang eines vorgegebenen ersten Pfades zugeführt wird, und **durch** das Krümmen des Bandes, um so den zweiten Frässchritt auf der genannten zweiten Fläche (18) ausführen zu können, sobald das Band in eine zweite Richtung (B) zugeführt wird, die zur ersten Richtung gegenläufig ist.

2. Verfahren gemäß Anspruch 1, **dadurch gekennzeichnet, dass** der zweite Frässchritt auf der zweiten Fläche (18) ausgeführt wird, sobald das Band (2) entlang eines zweiten Pfades zugeführt wird, der zum ersten Pfad parallel verläuft.

3. Verfahren gemäß Anspruch 1 oder 2, **gekennzeichnet durch** das Umfassen eines Schrittes, bei dem das Abfallmaterial **durch** die Gravitationskraft aufgefangen wird.

4. Verfahren gemäß einem der Ansprüche 1 bis 3, **gekennzeichnet durch** das Umfassen eines Schrittes des Abrollens des genannten Bandes (2), weg von einer ersten Bandspule (3), und eines Schrittes des Aufrollens des Bandes auf eine zweite Bandspule.

5. Verfahren gemäß Anspruch 4, **dadurch gekennzeichnet, dass** dem Schritt des Abrollens der erste Frässchritt vorausgeht, und dass der Schritt des Aufrollens nach dem zweiten Frässchritt erfolgt.

6. Verfahren gemäß einem der voranstehenden Ansprüche, **gekennzeichnet durch** das Umfassen von mindestens einem Schritt des Ausrichtens zur Begradigungsausrichtung des Bandes.

7. Verfahren gemäß Anspruch 6, **dadurch gekennzeichnet, dass** ein erster Schritt des Ausrichtens dem ersten Schritt des Fräsens vorausgeht und ein zweiter Schritt des Ausrichtens dem zweiten Schritt des Fräsens vorausgeht.

8. Verfahren gemäß einem der voranstehenden Ansprüche, **dadurch gekennzeichnet, dass** die Oberflächenfehler aus oxidiertem Material bestehen.

9. Vorrichtung (1) für die Bearbeitung eines gewalzten Bandes (2) zur Beseitigung von Oberflächenfehlern, und die eine erste Fräsmaschine (10) zum Ausführen eines ersten Frässchritts auf einer ersten Fläche (11) und eine zweite Fräsmaschine (20) zum Ausführen eines zweiten Frässchritts auf einer zweiten Fläche (18) des gewalzten Bandes aufweist; **dadurch gekennzeichnet, dass** sie Mittel (15) für ein Krümmen des gewalzten Bandes umfasst, und dass die Mittel (15) zwischen der ersten Fräsmaschine (10) und der zweiten Fräsmaschine (20) so angeordnet sind, dass der zweite Frässchritt auf der zweiten Fläche (18), die nach unten gerichtet ist, ausgeführt werden kann.

10. Vorrichtung gemäß Anspruch 9, **dadurch gekennzeichnet, dass** sie Abfallauffangeinrichtungen (12, 24) aufweist, die einer jeden Fräsmaschine (10, 20) zugeordnet sind.

11. Vorrichtung gemäß Anspruch 10, **dadurch gekennzeichnet, dass** die Abfallauffangeinrichtungen (12, 24) von der Unterseite her in Betrieb sind.

12. Vorrichtung gemäß Anspruch 9, **dadurch gekennzeichnet, dass** sich die erste Fräsmaschine (10) und die zweite Fräsmaschine (20) auf der gleichen Ebene befinden.

13. Vorrichtung gemäß Anspruch 12 **gekennzeichnet durch** das Umfassen eines ersten Richtgerätes (6) und eines zweiten Richtgerätes (19).

## Revendications

1. Procédé d'usinage d'une bande laminée (2) pour éliminer les défauts de surface, ledit procédé comprenant une première étape de fraisage sur une première face (11) et une deuxième étape de fraisage sur une deuxième face (18) opposée à la première face, **caractérisé en ce que** tant ladite première étape de fraisage que ladite deuxième étape de fraisage sont réalisées avec ladite première face et ladite deuxième face tournées vers le bas et comprenant les étapes de mise en oeuvre de ladite première étape de fraisage sur ladite première face (11) de ladite bande à mesure que la bande est amenée dans une première direction (A) le long d'un premier trajet prédéterminé et de cintrage de ladite bande afin de réaliser ladite deuxième étape de fraisage sur ladite deuxième face (18) à mesure que ladite bande est amenée dans une deuxième direction (B) opposée à ladite première direction.

2. Procédé selon la revendication 1, **caractérisé en ce que** ladite deuxième étape de fraisage est réalisée sur ladite deuxième face (18) à mesure que ladite bande (2) est amenée le long d'un deuxième trajet parallèle audit premier trajet.

3. Procédé selon la revendication 1 ou 2, **caractérisé en ce qu'**il comprend une étape de recueil de matériau résiduaire par la force de gravité.

4. Procédé selon l'une quelconque des revendications 1 à 3, **caractérisé en ce qu'**il comprend une étape de dévidage de ladite bande (2) d'une première bobine (3) et une étape d'enroulement de ladite bande sur une deuxième bobine.

5. Procédé selon la revendication 4, **caractérisé en ce que** ladite étape de dévidage précède ladite première étape de fraisage et ladite étape d'enroulement suit ladite deuxième étape de fraisage.

6. Procédé selon l'une quelconque des revendications précédentes, **caractérisé en ce qu'**il comprend au moins une étape de redressage pour redresser ladite bande.

7. Procédé selon la revendication 6, **caractérisé en ce qu'**une première étape de redressage précède ladite première étape de fraisage et une deuxième étape de redressage précède ladite deuxième étape de fraisage.

8. Procédé selon l'une quelconque des revendications précédentes, **caractérisé en ce que** lesdits défauts de surface comportent un matériau oxydé.

9. Dispositif (1) d'usinage d'une bande laminée (2) pour éliminer les défauts de surface, comprenant une première machine de fraisage (10) pour réaliser une première étape de fraisage sur une première face (11) de ladite bande laminée (2) et une deuxième machine de fraisage (20) pour réaliser une deuxième étape de fraisage sur une deuxième face (18) de ladite bande laminée, **caractérisé en ce qu'**il comprend des moyens (15) pour cintrer ladite bande laminée et **en ce que** lesdits moyens (15) sont interposés entre ladite première machine de fraisage (10) et ladite deuxième machine de fraisage (20) de sorte que ladite deuxième étape de fraisage est réalisée sur ladite deuxième face (18) tournée vers le bas.

10. Dispositif selon la revendication 9, **caractérisé en ce qu'**il comprend des moyens de recueil de matériau résiduaire (12, 24) associés à chaque dite machine de fraisage (10, 20).

11. Dispositif selon la revendication 10, **caractérisé en ce que** lesdits moyens de recueil de matériau résiduaire (12, 24) fonctionnent du dessous.

12. Dispositif selon la revendication 9, **caractérisé en ce que** ladite première machine de fraisage (10) et ladite deuxième machine de fraisage (20) sont au même niveau.

13. Dispositif selon la revendication 12, **caractérisé en ce qu'**il comprend une première machine à redresser (6) et une deuxième machine à redresser (19).
